# EUROPÄISCHE PATENTSCHRIFT

(11) **EP 3 616 775 B1**
(45) Veröffentlichungstag und Bekanntmachung des Hinweises auf die Patenterteilung: **01.05.2024**
(21) Anmeldenummer: 18020425.7
(22) Anmeldetag: 03.09.2018
(51) Int. Cl.: B01D 53/64, B01D 53/52

(54) **VORRICHTUNG ZUR ABTRENNUNG VON METALLCARBONYLEN AUS ROHSYNTHESEGAS**
DEVICE FOR THE SEPARATION OF METAL CARBONYLS FROM RAW SYNTHESIS GAS
DISPOSITIF DE SÉPARATION DES MÉTAUX CARBONYLES À PARTIR DE GAZ BRUT DE SYNTHÈSE

(43) Veröffentlichungstag der Anmeldung: 04.03.2020
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Corbet, Sharon, 60438 Frankfurt am Main (DE); Gubrinski, Alfred, 64390 Erzhausen (DE); Schmidt, Sophia, D-60486 Frankfurt am Main (DE)
(74) Vertreter: Stang, Stefan

(56) Entgegenhaltungen:
- WO-A1-03/022397
- DE-A1- 10 023 661
- DE-A1- 19 716 310
- DE-A1-102007 051 181
- MYUNG WON SEO ET AL: "Methanol absorption characteristics for the removal of H2S (hydrogen sulfide), COS (carbonyl sulfide) and CO2 (carbon dioxide) in a pilot-scale biomass-to-liquid process", ENERGY, Bd. 66, 1. März 2014 (2014-03-01), Seiten 56-62, XP055533084, AMSTERDAM, NL ISSN: 0360-5442, DOI: 10.1016/j.energy.2013.08.038

## Beschreibung

### Gebiet der Erfindung

Die Erfindung betrifft die Entfernung von Metallcarbonylen aus Rohsynthesegas von einem Gaswäscheverfahren mit einem physikalisch wirkenden Waschmittel. Die Erfindung betrifft einen Aufbereitungsbehälter zur Entfernung von Metallcarbonylen aus Rohsynthesegas, so wie eine Vorrichtung aufweisend einen solchen Aufbereitungsbehälter.

### Stand der Technik

Verfahren zur Abtrennung von unerwünschten Begleitstoffen aus technischen Rohgasen mittels physikalischer oder chemischer Absorption sind aus dem Stand der Technik bekannt. So können mit solchen Verfahren unerwünschte, saure Bestandteile aus durch Vergasung oder Reformierung von kohlenstoffhaltigen Einsatzstoffen erzeugten Rohsynthesegasen, beispielsweise Kohlendioxid (CO₂) und Schwefelwasserstoff (H₂S), aber auch Carbonylsulfid (COS), Mercaptane und Cyanwasserstoff (HCN), von den erwünschten Synthesegasbestandteilen wie Wasserstoff (H₂) und Kohlenmonoxid (CO) bis in den Spurenbereich entfernt werden.

Ein bekanntes und häufig angewendetes Verfahren ist das Rectisol-Verfahren, das in Ullmann's Encyclopedia of Industrial Chemistry, 6. Aufl. Bd. 15, S. 399 ff. grundsätzlich beschrieben wird. Im Rectisol-Verfahren erfolgt die Aufnahme der oben erwähnten, unerwünschten Störkomponenten durch kaltes, d. h. signifikant unter Umgebungstemperatur abgekühltes Methanol als Absorbens oder Waschmittel, wobei in einer Absorberkolonne, auch als Absorber oder Waschkolonne bezeichnet, ein intensiver Stoffaustausch zwischen dem Rohgas und dem Absorptionsmittel bzw. Waschmittel erfolgt. Dabei erhöht sich die Löslichkeit der unerwünschten Gasbestandteile drastisch mit sinkender Temperatur des Methanols und zunehmendem Druck, während sie für Wasserstoff und Kohlenmonoxid praktisch konstant bleibt. Methanol hat zudem den Vorteil, selbst bei Temperaturen bis hinab zu -75 °C noch eine geringe Viskosität aufzuweisen, womit es auch bei sehr niedrigen Temperaturen großtechnisch verwendbar ist.

Bei der Herstellung von Synthesegas aus Einsatzstoffen mit metallischen Spuren (zum Beispiel Kohle) entstehen Metallcarbonyle, die den Einsatz des Synthesegases bei einer Vielzahl von chemischen Herstellungsverfahren beeinträchtigen können. Bei den Metallcarbonylen handelt es sich um Komplexverbindungen, in denen Kohlenmonoxid (CO) koordinativ an ein Metallatom gebunden ist. Insbesondere handelt es sich bei den Metallcarbonylen um Nickelcarbonyle, zum Beispiel Tetracarbonylnickel(0) ([Ni(CO)₄]), und Eisencarbonyle, zum Beispiel Pentacarbonyleisen(0) ([Fe(CO)₅]). In der Regel sind die Metallcarbonyle gut in den bei Gaswäschen verwendeten Waschmitteln löslich und können dadurch aus dem Syntheserohgas entfernt werden. Insbesondere beim Verwenden physikalisch wirkender Waschmittel wie Methanol können Metallcarbonyle jedoch beim anschließenden Regenerieren des Waschmittels, beispielsweise bei der Heißregenerierung, zu Problemen führen, da sich Metallcarbonyle vorzugsweise in warmen beziehungsweise heißen Bereichen einer Gaswäscheanlage mit im beladenen Waschmittel enthaltenem Schwefelwasserstoff (H₂S) zu Metallsulfiden umsetzen. Dabei ist die zugrundeliegende Gleichgewichtsreaktion auch von der schlechten Löslichkeit der Metallsulfide getrieben, die durch Ausfällen aus dem Reaktionsgleichgewicht entfernt werden, wie beispielhaft anhand der Reaktion zwischen Pentacarbonyleisen(0) und Schwefelwasserstoff (H₂S) zu Eisen(II)sulfid, Kohlenmonoxid und Wasserstoff gezeigt:

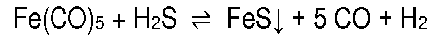

Da Metallsulfide praktisch in allen gängigen Lösungsmitteln schwerlöslich bis unlöslich sind, tritt bei allen metallcarbonyl- und schwefelwasserstoffhaltigen Rohsynthesegasen in den Gaswäscheverfahren das Problem auf, dass Metallsulfide durch Ablagerungen zu Verlegungen und Verstopfungen der betroffenen Anlagenteile führen können.

Die WO 98/47602 sieht zur Entfernung von Metallcarbonylen ein Verfahren vor, in dem die obige Gleichgewichtsreaktion durch Entfernung von Kohlenmonoxid beispielsweise mittels Strippen aus dem Waschmittel auf die Seite der Metallsulfide verschoben wird, wodurch ein beabsichtigtes Ausfällen der Metallsulfide aus dem Waschmittel herbeigeführt wird. Dafür wird das beladene Waschmittel in einen Entspannungsbehälter hinein druckentspannt, wodurch ein Entspannungsgas freigesetzt wird, das auch Kohlenmonoxid (CO) enthält. Das um eine bestimmte CO Menge verarmte Waschmittel wird anschließend in einen Reaktions- und Absetzbehälter überführt, in dem die Metallcarbonyle in Abhängigkeit von der Verweilzeit im Behälter und der Art des Metalls weitgehend vollständig durch Fällung als Metallsulfide aus dem Waschmittel entfernt werden. Aufgrund der längeren Verweilzeit der Metallsulfide aufweisenden Suspension im Reaktions- und Absetzbehälter werden solche Behälter auch als Verweilzeitbehälter bezeichnet. Der Überstand der Suspension, das von Metallcarbonylen weitgehend befreite Waschmittel, wird anschließend aus dem Verweilzeitbehälter abgezogen und einer Heißregenerierung zugeführt.

Das im Entspannungsbehälter freigesetzte und aus dem Entspannungsbehälter abgezogene Entspannungsgas enthält auch an diesem Punkt des Verfahrens unerwünscht freigesetzte Metallcarbonyle. Um auch diese Metallcarbonyle der Fällung als Metallsulfide zugänglich zu machen, wird das Entspannungsgas zunächst gekühlt und anschließend in einer separaten als Carbonylwäscher bezeichneten Vorrichtung mit regeneriertem Waschmittel zurückgewaschen. Das mit Metallcarbonylen beladene Waschmittel wird anschließend in den Entspannungsbehälter zurückgeführt, aus diesem abgezogen und dem Verweilzeitbehälter zugeführt. Dabei ist eine Kühlung des Entspannungsgases erforderlich, da sich dadurch die Menge der im Waschmittel des Carbonylwäschers absorbierten Gase durch bessere Absorption bei niedrigeren Temperaturen signifikant erhöht.

Das aus dem Stand der Technik bekannte Verfahren weist mehrere Nachteile auf. Für die Kühlung der aus dem Entspannungsbehälter freigesetzten Entspannungsgase ist ein separater aktiver Wärmetauscher mit Kühlwasserzufuhr erforderlich, um die Entspannungsgase für die nachfolgende Absorption im Carbonylwäscher ausreichend zu kühlen.

Ferner geht mit der Verwendung mehrerer autarker, durch Rohrleitungen verbundener Apparate - Carbonylwäscher, Entspannungsbehälter, Kühler und Verweilzeitbehälter - ein großer Platzbedarf und Aufwand für den Apparatebau einher.

Weiterhin ist die im Entspannungsbehälter des bekannten Verfahrens freigesetzte Kohlenmonoxid (CO) Menge oft nicht ausreichend, um das Gleichgewicht der obigen Gleichgewichtsreaktion so auf die Produktseite zu verschieben, dass die Metallcarbonyle möglichst vollständig entfernt werden.

### Beschreibung der Erfindung

Die Aufgabe der Erfindung besteht also darin, die vorgenannten Nachteile des Standes der Technik zumindest teilweise zu überwinden.

Aufgabe der vorliegenden Erfindung besteht darin, eine Vorrichtung e-anzugeben, die wenigstens eine der vorgenannten Aufgaben zumindest teilweise löst.

Die Vorrichtung der Erfindung eignet sich um in einem Verfahren, welches nicht zur Erfindung gehört, wie folgt eingesetzt zu werden: Ein Verfahren zur Entfernung von Metallcarbonylen aus Rohsynthesegas in einem Gaswäscheverfahren mit einem physikalisch wirkenden Waschmittel, bei dem ein zumindest mit Schwefelwasserstoff (H₂S) und Metallcarbonylen beladenes Waschmittel aus einer Absorptionsvorrichtung einem einen Verweilzeitbereich und einen Waschbereich aufweisenden Aufbereitungsbehälter zugeführt wird, wobei die Metalle der Metallcarbonyle im Verweilzeitbereich zumindest teilweise als Metallsulfide aus dem beladenen Waschmittel gefällt werden, und dem Waschbereich ein regeneriertes Waschmittel zugeführt wird. Erfindungsgemäß ist vorgesehen, dass der Verweilzeitbereich und der Waschbereich der erfindungsgemässigen Vorrichtung einen gasdurchlässigen Boden voneinander separiert sind, im Waschbereich eine an den gasdurchlässigen Boden angrenzende, regeneriertes Waschmittel aufweisende Flüssigkeitsschicht gebildet wird, aus dem Verweilzeitbereich ausgasende Metallcarbonyle den gasdurchlässigen Boden passieren und zumindest teilweise vom regenerierten Waschmittel im Waschbereich absorbiert werden, wobei ein Metallcarbonyle aufweisendes Waschmittel erhalten wird und die aus dem Verweilzeitbereich ausgasenden Metallcarbonyle durch die Flüssigkeitsschicht gekühlt werden.

Als "Metallcarbonyle" kommen grundsätzlich alle komplexen Metallverbindungen in Frage, in denen Kohlenmonoxid-Moleküle koordinativ an ein zentrales Metallatom gebunden sind. Besonders relevante Metallcarbonyle sind Eisen(0)- und Nickel(0)-carbonyle, insbesondere Tetracarbonylnickel(0) ([Ni(CO)4]) sowie Pentacarbonyleisen(0) ([Fe(CO)5]).

Unter "Rohsynthesegas" wird ein Synthesegas verstanden, das (noch) über unerwünschte Bestandteile, insbesondere saure Bestandteile wie beispielsweise Schwefelwasserstoff (H₂S), Kohlendioxid (CO₂), Mercaptane und Cyanwasserstoff (HCN) verfügt, von denen es durch Gaswäsche in einem geeigneten Waschmittel zu befreien ist. Erwünschte Synthesegas-Bestandteile sind Kohlenmonoxid (CO) und Wasserstoff (H₂). Bei dem Synthesegas kann es sich um ein durch eine Synthesegas-Shift-Reaktion verändertes Synthesegas handeln, das heißt ein Synthesegas, in dem Kohlenmonoxid zur Gewinnung von Wasserstoff zumindest teilweise mit Wasser katalytisch zu Kohlendioxid und Wasserstoff umgesetzt wurde.

Unter einem "physikalisch wirkendem Waschmittel" wird ein Waschmittel verstanden, bei dem die Löslichkeit des betreffenden Gases im Waschmittel durch physikalische Wechselwirkungen bewirkt wird. Geeignete Waschmittel sind Methanol, 1-Methyl-2-pyrrolidon (NMP), eine Mischung von Dimethylethern von Polyethylenglycol, und Propylencarbonat (4-Methyl-1,3-dioxolan-2-on), sowie Mischungen davon oder damit. Ein bevorzugtes Waschmittel ist Methanol.

Der Aufbereitungsbehälter verfügt zumindest über einen Verweilzeitbereich und einen Waschbereich. Im Verweilzeitbereich werden die Metalle der Metallcarbonyle durch Reaktion mit einer im Waschmittel vorhandenen Schwefelverbindung, insbesondere Schwefelwasserstoff, zu Metallsulfiden umgesetzt. Aufgrund der Schwerlöslichkeit der Metallsulfide in den meisten gängigen Waschmitteln verbleiben die Metallsulfide dabei nicht in Lösung, werden also aufgrund ihres geringen Löslichkeitsprodukts ausgefällt. Die Fällungsreaktion nimmt abhängig von der Art des Metalls, der vorliegenden Konzentrationen, der Temperatur und dem Druck eine bestimmte Zeit in Anspruch. Bevorzugt wird die Fällungsreaktion im Verweilzeitbereich bei hohen Temperaturen durchgeführt. Da eine möglichst vollständige Fällung und Sedimentation der gefällten Sulfide angestrebt wird, ist der Aufbereitungsbehälters so konstruiert, das ein definiertes Flüssigkeitsvolumen des zu behandelnden beladenen Waschmittels für eine ausreichende Zeit im Verweilzeitbereich des Aufbereitungsbehälters verweilt. Die Verweilzeit für die Umsetzung der Metallcarbonyle zu Metallsulfiden wird dabei in Abhängigkeit von der Art und Zusammensetzung der Metallcarbonyle gewählt. So werden beispielsweise für die weitgehend vollständige Fällung von Eisensulfiden werden vorzugsweise Verweilzeiten von 1 bis 16 Stunden benötigt, besonders bevorzugt von wenigstens 3 Stunden. Für die Fällung von Nickelsulfiden werden vorzugsweise Verweilzeiten von 5 bis 80 Minuten benötigt, besonders bevorzugt von 15 bis 50 Minuten. In einem Beispiel des Verfahrens können mehrere Aufbereitungsbehälter für unterschiedliche Metallcarbonyle zum Einsatz kommen, die den mehreren Aufbereitungsbehältern aus unterschiedlichen Bereiches der Absorptionsvorrichtung entnommen werden.

Dem Aufbereitungsbehälter sind regelmäßig eine oder mehrere Druckentspannungsstufen vorgeschaltet. Der daraus resultierende niedrige Druck im Aufbereitungsbehälter führt dazu, das nicht umgesetzte Metallcarbonyle insbesondere bei den im Verweilzeitbereich herrschenden erhöhten Temperaturen aus dem Waschmittel ausgasen. Um die ausgegasten Metallcarbonyle der Fällung als Metallsulfide zugänglich zu machen, sind diese durch ein Waschmittel zurück zu waschen und anschließend beispielsweise in den Verweilzeitbereich des Aufbereitungsbehälters zurückzuführen. Das Zurückwaschen der Metallcarbonyle geschieht im Waschbereich des Verweilzeitbehälters. Dabei wird ein Metallcarbonyle enthaltendes Waschmittel erhalten. Um die Metallcarbonyle im Waschbereich des Aufbereitungsbehälters möglichst vollständig zu absorbieren, wird dem Waschbereich zur Absorption der Metallcarbonyle ein regeneriertes Waschmittel zugeführt. Unter einem "regenerierten" Waschmittel wird im Zusammenhang mit Gegenständen der Erfindung ein Waschmittel verstanden, das entweder teilweise oder vollständig regeneriert ist, das heißt nicht mit Gasbestandteilen beladen ist oder so niedrig mit Gasbestandteilen beladen ist, dass es zur Absorption der Metallcarbonyle geeignet ist.

Die Absorption der Metallcarbonyle im regenerierten Waschmittel ist dabei umso effizienter, je kälter das regenerierte Waschmittel und die Metallcarbonyle bei der Absorption sind. Der Verweilzeitbereich und der Waschbereich des Aufbereitungsbehälters sind daher durch einen gasdurchlässigen Boden voneinander separiert, auf dem sich eine regeneriertes Waschmittel aufweisende Flüssigkeitsschicht ausbildet. Die Metallcarbonyle werden im Waschbereich des Aufbereitungsbehälters durch das zugeführte regenerierte Waschmittel absorbiert und durch die an den gasdurchlässigen Boden angrenzende Flüssigkeitsschicht kontinuierlich gekühlt. Der Boden ist gasdurchlässig, damit die unter Prozessbedingungen gasförmigen Metallcarbonyle den Boden vom Verweilzeitbereich in Richtung Waschbereich passieren können.

"Gasdurchlässiger Boden" bedeutet im Zusammenhang mit Gegenständen der Erfindung, dass der Boden für gasförmige Substanzen, beispielsweise unter den Prozessbedingungen gasförmige Metallcarbonyle, durchlässig ist. Andererseits ist der gasdurchlässige Boden für eine Flüssigkeit nicht durchlässig oder zumindest so konstruiert, dass sich eine Flüssigkeitsschicht auf dem gasdurchlässigen Boden sammeln kann.

Das nicht-erfindungsgemäße Verfahren weist zumindest die Vorteile auf, dass erstens kein separater Kühler zum Kühlen der Metallcarbonyle erforderlich ist und zweitens der Verweilzeitbereich und der Waschbereich in einem einzigen Behälter realisiert werden können. Dadurch müssen Verweilzeitbehälter und Carbonylwäscher nicht als eigenständige Einheiten konstruiert werden, und ein zwischen Verweilzeitbehälter und Carbonylwäscher zwischengeschalteter Kühler mit eigener Kühlwasserversorgung zum Kühlen der Metallcarbonyle ist nicht erforderlich.

Eine bevorzugte Ausführungsform des Verfahrens ist dadurch gekennzeichnet, dass das Metallcarbonyle aufweisende Waschmittel aus dem Waschbereich in den Verweilzeitbereich überführt wird, um die Metalle im Metallcarbonyle aufweisenden Waschmittel im Verweilzeitbereich des Aufbereitungsbehälters als Metallsulfide zu fällen.

In dieser Ausführungsform wird beispielsweise eine direkte Fluidverbindung zwischen dem Waschbereich und dem Verweilzeitbereich realisiert, so dass sämtliche aus dem beladenen Waschmittel zugeführten Metallcarbonyle als Metallsulfide im Verweilzeitbereich des Aufbereitungsbehälters gefällt werden.

Eine bevorzugte Ausführungsform des Verfahrens ist dadurch gekennzeichnet, dass das zumindest mit Schwefelwasserstoff (H₂S) und Metallcarbonylen beladene Waschmittel einer Entspannungsregenerierung zur Entfernung von Kohlenmonoxid (CO) zugeführt wird, bevor es dem Aufbereitungsbehälter zugeführt wird.

Die Umsetzung der Metallcarbonyle mit Schwefelwasserstoff zu Metallsulfiden und Kohlenmonoxid ist eine Gleichgewichtsreaktion, die durch Entfernung von Kohlenmonoxid aus dem Reaktionsgleichgewicht auf die Produktseite, also auf die Seite der Metallsulfide, verschoben werden kann. Aus diesem Grund wird Kohlenmonoxid in vorteilhafterweise vor Zuführen des beladenen Waschmittels zum Aufbereitungsbehälter durch eine Entspannungsregenerierung entfernt. Bei der Entspannungsregenerierung wird der Druck des aus der Absorptionsvorrichtung abgezogenen beladenen Waschmittels gesenkt, so dass die Löslichkeit der im beladenen Waschmittel absorbierten Gase gemäß dem Gesetz von Henry sinkt. Das bei der Entspannungsregenerierung erhaltene Entspannungsgas enthält auch Kohlenmonoxid, wodurch die Bildung von Metallsulfiden im beladenen Waschmittel verstärkt wird. Der Druck im Verweilzeitbereich des Aufbereitungsbehälters beträgt vorzugsweise 1 bis 20 bar, weiter bevorzugt mindestens 3 bar. Der für den Verweilzeitbereich anzuwendende Druck hängt dabei hauptsächlich vom Druck der dem Verweilzeitbereich unmittelbar vorgeschalteten Entspannungsregenerierung ab.

Dem zumindest mit Schwefelwasserstoff (H₂S) und Metallcarbonylen beladenen Waschmittel kann bei der Entspannungsregenerierung ein Stripp-Gas zum zusätzlichen Austreiben von Kohlenmonoxid (CO) zugeführt werden.

Als Strippgase sind inerte Gase wie beispielsweise Stickstoff geeignet. Durch das Strippgas wird die Entfernung des Kohlenmonoxids in vorteilhafter Weise verstärkt. Je mehr Kohlenmonoxid vor der Zuführung zum Aufbereitungsbehälter entfernt wird, desto mehr Metalle werden im Verweilzeitbereiche des Aufbereitungsbehälters als Metallsulfide ausgefällt. Ferner wird dadurch die Ausbeute an dem Wertgas Kohlenmonoxid erhöht. Bei der Entspannungsregenerierung ausgetriebene Wertgase wie Kohlenmonoxid werden nach Rückverdichtung wieder dem Rohsynthesegasstrom zugeführt und gelangen anschließend erneut zur Gaswäsche in die Absorptionsvorrichtung.

Daher ist eine bevorzugte Ausführungsform des nicht-erfindungsgemäßen Verfahrens dadurch gekennzeichnet, dass bei der Entspannungsregenerierung ein Entspannungsgas erhalten wird, das rückverdichtet und als Recycle-Gas zur Absorptionsvorrichtung zurückgeführt wird.

Es ist dabei weiter von Vorteil, wenn die Entspannungsregenerierung mehrere Druckstufen umfasst.

Dabei sind die mehreren Druckstufen der Entspannungsregenerierung vorzugsweise in Serie geschaltet, wobei der Druck von Druckstufe zu Druckstufe sinkt. Die in den einzelnen Druckstufen erhaltenen Entspannungsgase werden rückverdichtet, dabei zusammengeführt und als Recycle-Gas-Strom zur Absorptionsvorrichtung zurückgeführt. Der Druck im rückverdichteten Recycle-Gas-Strom entspricht dem Druck in der Absorptionsvorrichtung und beträgt üblicherweise 10 bis 100 bar.

Eine bevorzugte Ausführungsform des nicht-erfindungsgemäßen Verfahrens ist dadurch gekennzeichnet, dass das zumindest mit Schwefelwasserstoff (H₂S) und Metallcarbonylen beladene Waschmittel erwärmt wird, bevor es dem Aufbereitungsbehälter zugeführt wird. Dabei weist das erwärmte beladene Waschmittel vorzugsweise eine Temperatur von 0 °C bis 150 °C auf, weiter bevorzugt von wenigstens 40 °C.

Die Reaktion der Umsetzung der Metallcarbonyle mit Schwefelwasserstoff zu Metallsulfiden und Kohlenmonoxid erfordert einen gewissen Wärmeeintrag zum Erreichen der Aktivierungsenergie, wird jedoch bei Einstellung eines thermodynamischen Gleichgewichts mit weiterer Erhöhung des Wärmeeintrags auf die Seite der Reaktionsprodukte verschoben. Gleichzeitig wird Kohlenmonoxid durch Erwärmung zusätzlich desorbiert. Kohlenmonoxid weist bezüglich aller gängigen zur Gaswäsche von Synthesegasen verwendeten Waschmitteln einen niedrigen Henry-Koeffizienten auf. Da der Henry-Koeffizient eine Funktion der Temperatur ist und mit Erhöhung der Temperatur kleiner wird, kann die Ausbeute an aus dem Waschmittel ausgetriebenem Kohlenmonoxid durch Erhöhung der Temperatur weiter gesteigert werden.

Gleichzeitig erhöht sich die Menge an im Aufbereitungsbehälter als Metallsulfide ausgefällten Metallen.

Die Aufgaben der Erfindung werden zumindest teilweise gelöst durch einen Aufbereitungsbehälter zur Entfernung von Metallcarbonylen aus Rohsynthesegas, aufweisend einen Verweilzeitbereich zum Fällen von Feststoffen aus einer Lösung oder Suspension; einen ersten Zulauf zum Zuführen der Lösung oder Suspension zum Verweilzeitbereich; einen ersten Ablauf zum Abführen gefällter Feststoffe aus dem Verweilzeitbereich; einen zweiten Ablauf zum Abführen des durch Fällen der Feststoffe erhaltenen Überstandes der Lösung oder Suspension aus dem Verweilzeitbereich; einen Waschbereich zur Absorption von aus der Lösung oder Suspension austretenden Gasbestandteilen; einen zweiten Zulauf zum Zuführen von regeneriertem Waschmittel zum Waschbereich. Erfindungsgemäß ist vorgesehen, dass der Waschbereich und der Verweilzeitbereich durch eine Fluidverbindung miteinander verbunden sind und der Verweilzeitbereich und der Waschbereich des Aufbereitungsbehälters durch einen gasdurchlässigen Boden voneinander separiert sind. Der erfindungsgemäße Aufbereitungsbehälter verfügt über einen Waschbereich und einen Verweilzeitbereich. Der Wasch- und Verweilzeitbereich sind durch einen gasdurchlässigen Boden voneinander separiert, das heißt insbesondere durch den gasdurchlässigen Boden räumlich voneinander getrennt. Der Verweilzeitbereich dient dem Fällen von Feststoffen aus einer Lösung oder Suspension. Mit anderen Worten, dem Verweilzeitbereich wird entweder eine Lösung oder eine Suspension zugeführt, aus der ein Feststoff im Verweilzeitbereich ausgefällt wird. "Fällen" kann dabei bedeuten, dass ein vorher in der Lösung oder Suspension gelöster Stoff durch eine chemische Reaktion oder Änderung der Umgebungsbedingungen unlöslich wird, das heißt eine feste Phase bildet oder in eine bereits bestehende feste Phase übergeht. Es kann jedoch auch bedeuten, dass ein bereits in der Suspension vorhandener Feststoff, also bereits gefällter Feststoff, im Verweilzeitbereich sedimentiert und dadurch leichter als Feststoff abtrennbar ist, beispielsweise durch Bildung größerer Agglomerate.

Der Verweilzeitbereich verfügt über einen ersten Zulauf zum Zuführen der Lösung oder Suspension. Ferner verfügt der Verweilzeitbereich über einen ersten Ablauf zum Abführen der Feststoffe, nachdem diese im Verweilzeitbereich ausgefällt wurden. Die Feststoffe werden in Form einer feststoffreichen Suspension aus dem Verweilzeitbereich des Aufbereitungsbehälters abgeführt. Die feststoffreiche Suspension wird oftmals einfach als "Schlamm" bezeichnet. Im Zusammenhang mit Gegenständen der Erfindung kann es sich dabei um einen Schlamm handeln, der über einen hohen Anteil an Metallsulfiden verfügt. Der zweite Ablauf dient dem Abführen des durch Fällen der Feststoffe erhaltenen Überstandes der Lösung oder Suspension. Der Überstand weist keine oder nur einen sehr geringen Anteil an Feststoffen auf. Der Überstand ist im Zusammenhang mit Gegenständen der Erfindung beispielsweise ein Waschmittel, welches anschließend einer Heißregenerierung zugeführt werden kann, um es anschließend erneut in einer Absorptionsvorrichtung zu verwenden.

Der Aufbereitungsbehälter verfügt über einen Waschbereich zur Absorption von aus der Lösung oder Suspension austretenden Gasbestandteilen. Um Gasbestandteile zu absorbieren, verfügt der Aufbereitungsbehälter über einen zweiten Zulauf zum Zuführen von regeneriertem Waschmittel zum Waschbereich. Im Waschbereich sind im Verweilzeitbereich aus einer Lösung oder Suspension ausgasende Bestandteile durch das regenerierte Waschmittel im Waschbereich absorbierbar.

Eine bevorzugte Ausführungsform des erfindungsgemäßen Aufbereitungsbehälters ist dadurch gekennzeichnet, dass der Verweilzeitbereich, der Waschbereich und der gasdurchlässige Boden in ein einziges Gehäuse des Aufbereitungsbehälters integriert sind.

Durch die Integration in ein einziges Gehäuse kann der Aufbereitungsbehälter platzsparend konstruiert werden. Die Integration in ein Gehäuse ist durch die Trennung von Waschbereich und Verweilzeitbereich durch den gasdurchlässigen Boden realisierbar. Auf dem gasdurchlässigen Boden wird im Betrieb eine Flüssigkeitsschicht ausgebildet. Aus dem Verweilzeitbereich ausgasende Bestandteile sind durch die Flüssigkeitsschicht kühlbar. Dadurch kann auf einen separaten Kühler verzichtet werden, wodurch keine zusätzlichen Rohrleitungen erforderlich sind und der Waschbereich und der Verweilzeitbereich in ein einziges Gehäuse integrierbar sind.

Der erfindungsgemässen Aufbereitungsbehälter ist dadurch gekennzeichnet, dass der gasdurchlässige Boden als Flüssigkeits-Sammelboden ausgestaltet ist, der als Kaminboden ausgestaltet ist.

Flüssigkeits-Sammelböden, insbesondere Kaminböden sind so konstruierbar, dass die Höhe der gebildeten Flüssigkeitsschicht je nach Anforderung eingestellt werden kann. Je nach zu erzielender Kühlwirkung durch die Flüssigkeitsschicht kann der Kaminboden so konstruiert werden, dass es im Betrieb zur Ausbildung einer höheren oder niedrigeren Flüssigkeitsschicht kommt.

Eine bevorzugte Ausführungsform des erfindungsgemäßen Aufbereitungsbehälters ist dadurch gekennzeichnet, dass der Verweilzeitbereich des Aufbereitungsbehälters eine Reaktionszone und eine Absetzzone aufweist.

Eine Trennung in Reaktions- und Absetzzone ist von Vorteil, um zum einen bestimmte Reaktionsbedingungen in der Reaktionszone einzustellen und andererseits das Absetzen von Feststoffen in der Absetzzone des Verweilzeitbereichs zu verbessern. So kann die Reaktionszone beispielsweise über eine Heizvorrichtung verfügen, um die Fällung eines Metallsulifds aus einer Metallcarbonyle enthaltenden Lösung oder Suspension zu fördern. Die Reaktionszone kann auch über bestimmte Einbauten verfügen, um die Oberfläche der Reaktionszone zu vergrößern, um so eine möglichst große Oberfläche für Kristallkeime zu schaffen. Andererseits kann die Absetzzone so konstruiert sein, dass die Sedimentation der in der Reaktionszone ausgefällten Feststoffe erleichtert wird.

Daher ist eine bevorzugte Ausführungsform des erfindungsgemäßen Aufbereitungsbehälters dadurch gekennzeichnet, dass die Absetzzone des Verweilzeitbereichs einen konisch ausgeformten Boden zum Sammeln der gefällten Feststoffe aufweist.

Ferner ist eine bevorzugte Ausführungsform des erfindungsgemäßen Aufbereitungsbehälters daher dadurch gekennzeichnet, dass in der Reaktionszone Füllkörper und/oder strukturierte Packungen zur Vergrößerung der inneren Oberfläche der Reaktionszone angeordnet sind.

Vorzugsweise sind die Füllkörper regellos angeordnet. Es kann sich dabei um übliche dem Fachmann bekannte Füllkörper aus Keramik, Metall oder Kunststoff handeln, die in Füllkörperschüttungen Verwendung finden. Beispiele für solche Füllkörper sind Raschig-Ringe^{®}, Pall-Ringe^{®} oder Berl-Sattel. Grundsätzlich kommt jedoch jede Kombination aus Material und Füllkörper-Form in Frage, die den jeweiligen Reaktionsbedingungen stand hält und zur Vergrößerung der Oberfläche in der Reaktionszone geeignet ist.

Die Reaktionszone kann einen eigenen Einlass sowie einen Auslass aufweisen, wobei die Reaktionszone durch den Einlass und/oder den Auslass von der Absetzzone getrennt ist.

Eine bevorzugte Ausführungsform des erfindungsgemäßen Aufbereitungsbehälters ist dadurch gekennzeichnet, dass der Aufbereitungsbehälter keinen Wärmetauscher aufweist.

Aufgrund der Konstruktion des Aufbereitungsbehälters, das heißt die Trennung des Waschbereichs und des Verweilzeitbereichs durch einen gasdurchlässigen Boden kann auf einen separaten Wärmetauscher zum Kühlen von aus dem Verweilzeitbereich ausgasenden Bestandteilen verzichtet werden. Insbesondere wird kein aktiver Wärmetauscher benötigt, der über ein eigenes Kühlmedium verfügt. Ein typisches Beispiel für einen aktiven Wärmetauscher ist ein Rohrbündelwärmetauscher.

Vorzugsweise weist der Aufbereitungsbehälter keinen indirekten Wärmetauscher auf. Durch die erfindungsgemäße Konstruktion des Aufbereitungsbehälters findet eine direkte und damit effizientere Kühlung von aus dem Verweilzeitbereich ausgasenden Bestandteilen durch die im Waschbereich ausbildbare Flüssigkeitsschicht statt, wodurch auf einen dedizierten indirekten Wärmetauscher verzichtet werden kann.

Eine bevorzugte Ausführungsform des erfindungsgemäßen Aufbereitungsbehälters ist dadurch gekennzeichnet, dass die Fluidverbindung zur Überführung eines Fluids vom Waschbereich zum Verweilzeitbereich des Aufbereitungsbehälters ausgestaltet ist.

Dadurch werden im Waschbereich absorbierte Bestandteile, beispielsweise Metallcarbonyle, in den Verweilzeitbereich des Aufbereitungsbehälters zurückgeführt und dort als Metallsulfide gefällt. Dadurch kann ein vollständiges oder zumindest nahezu vollständiges Entfernen von Metallcarbonylen durch Fällen als Metallsulfide erreicht werden.

Die Aufgaben der Erfindung werden ferner zumindest teilweise gelöst durch eine Vorrichtung zur Gaswäsche von Rohsynthesegas, wobei die Vorrichtung einen erfindungsgemäßen Aufbereitungsbehälter aufweist.

Bei der Vorrichtung kann es sich beispielsweise um eine dem Fachmann bekannte Vorrichtung zur Gaswäsche von Rohsynthesegasen handeln. Die Vorrichtung kann beispielsweise eine oder mehrere Absorptionsvorrichtungen, mehrere Vorrichtungen zur Regenerierung des für die Gaswäsche verwendeten Waschmittels und eine Destillationsvorrichtung zur Trennung von Wasser vom Waschmittel beinhalten, wobei die vorgenannten Komponenten der Vorrichtung und der erfindungsgemäße Aufbereitungsbehälter durch Fluidverbindungen miteinander in Kontakt stehen.

Die Vorrichtung der Erfindung wird im Folgenden durch Beispiele näher erläutert, ohne den Gegenstand der Erfindung zu beschränken. Weitere Merkmale, Vorteile und Anwendungsmöglichkeiten der Vorrichtung der Erfindung ergeben sich aus der nachfolgenden Beschreibung der Ausführungsbeispiele in Zusammenhang mit den Zeichnungen.

Es zeigt
- Figur 1: ein schematisch dargestelltes Verfahrensfließbild eines Verfahrens zur Entfernung von Metallcarbonylen nach dem Stand der Technik,
- Figur 2: eine schematische Darstellung eines erfindungsgemäßen Aufbereitungsbehälters und
- Figur 3: ein schematisch dargestelltes Verfahrensfließbild eines nichterfindungsgemässen Verfahrens zur Entfernung von Metallcarbonylen unter Verwendung eines erfindungsgemäßen Aufbereitungsbehälters.

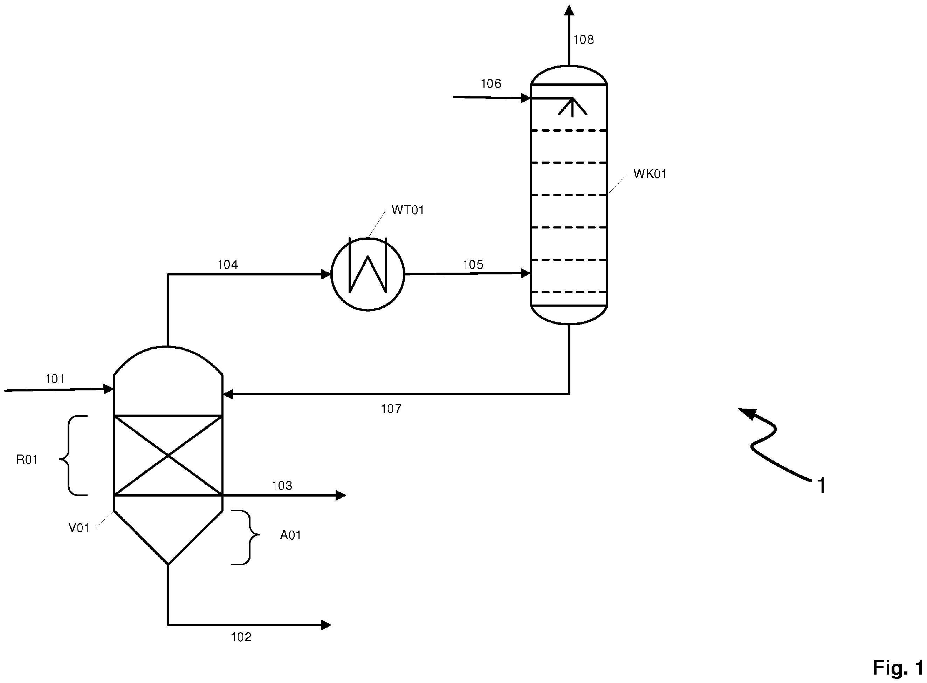

Figur 1 zeigt schematisch ein in Teilen dargestelltes Verfahren 1 zur Entfernung von Metallcarbonylen aus einem Rohsynthesegas in einem Gaswäscheverfahren mit Methanol als physikalisch wirkendem Waschmittel nach dem Stand der Technik.

Aus einer Absorptionsvorrichtung (nicht gezeigt) abgezogenes, mit zumindest Schwefelwasserstoff und Metallcarbonylen beladenes Methanol durchläuft mehrere Stufen einer Entspannungsregenerierung (nicht gezeigt) und wird über Leitung 101 Verweilzeitbehälter V01 zugeführt. Im mit einer Reaktionszone R01 und Absetzzone A01 ausgerüsteten Verweilzeitbehälter V01 reagieren im kohlenmonoxidarmen Methanol enthaltene Metallcarbonyle mit Schwefelwasserstoff zu Metallsulfiden. Metallcarbonyle werden in der Reaktions- und Absetzzone R01, A01 des Verweilzeitbehälters V01 bei einer Verweilzeit von wenigstens 5 Stunden weitgehend vollständig zu Metallsulfiden umgesetzt. Metallsulfide sedimentieren in der konisch ausgeformten Absetzzone A01 und werden als Sulfidschlamm über Leitung 102 abgezogen. Der nur wenige feste Metallsulfide aufweisende Überstand des Präzipitats besteht weitgehend aus beladenem Methanol. Er wird über Leitung 103 abgezogen und darauf folgend einer Heißregenerierung zugeführt (nicht gezeigt). Aus dem beladenen Methanol ausgasende Metallcarbonyle werden über Leitung 104 abgezogen, im indirekten Wärmetauscher WT01 gekühlt und über Leitung 105 Carbonyl-Waschkolonne WK01 zugeführt. Carbonyl-Waschkolonne WK01 wird im Kopfbereich über Leitung 106 und einen daran angeschlossenen Flüssigkeitsverteiler mit regeneriertem Methanol beschickt. Regeneriertes Methanol nimmt in WK01 durch WT01 gekühlte Metallcarbonyle durch Absorption im Gegenstromverfahren weitgehend auf. Mit Metallcarbonylen beladenes Methanol wird anschließend über Leitung 107 zu Verweilzeitbehälter V01 zurückgeführt, wodurch die ursprünglich nicht in V01 zu Metallsulfiden umgesetzten Metallcarbonyle einer Fällung als Metallsulfide zugänglich gemacht werden. Nicht durch regeneriertes Methanol in WK01 absorbierte Wertgase wie Kohlenmonoxid oder Wasserstoff werden über Leitung 108 abgezogen und nach Rückverdichtung als Recyclegasstrom zur Absorptionsvorrichtung zurückgeführt (nicht gezeigt).

Zur Kühlung der aus V01 ausgasenden Metallcarbonyle ist indirekter Wärmetauscher WT01 erforderlich, der über eine dedizierte Kühlwasserversorgung verfügt. Aufgrund der hohen im Verweilzeitbehälter herrschenden Temperaturen ist eine Kühlung der Metallcarbonyle erforderlich, damit diese vollständig in WK01 durch regeneriertes Methanol zurückgewaschen (absorbiert) werden.

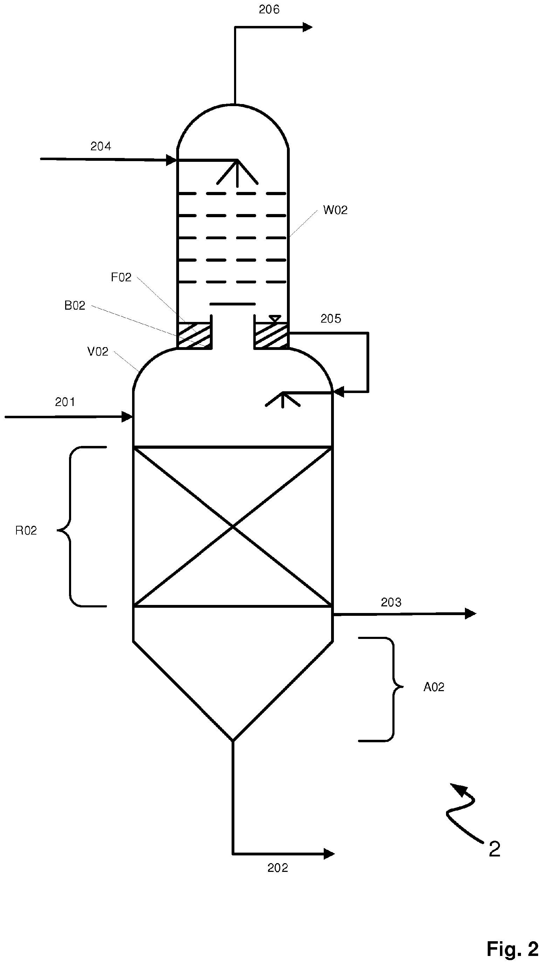

Figur 2 zeigt eine schematische Darstellung eines erfindungsgemäßen Aufbereitungsbehälters 2 zur Entfernung von Metallcarbonylen aus Rohsynthesegas.

Aufbereitungsbehälter 2 verfügt über einen unteren Verweilzeitbereich V02 und einen oberen Waschbereich WO2. Verweilzeitbereich V02 und Waschbereich WO2 sind durch einen gasdurchlässigen Boden B02 voneinander getrennt. Gasdurchlässiger Boden B02 ist im Beispiel der Figur 2 als Kaminboden ausgestaltet. Verweilzeitbereich V02 weist eine obere Reaktionszone R02 und eine untere Absetzzone A02 auf. Reaktionszone R02 ist mit regellosen Füllkörpern zur Vergrößerung der inneren Oberfläche der Reaktionszone R02 versehen. Über einen ersten Zulauf, Leitung 201, kann Verweilzeitbereich V02 des Aufbereitungsbehälters 2 beispielsweise eine Lösung aus mit Metallcarbonylen und Schwefelwasserstoff beladenem Methanol zugeführt werden. In Reaktionszone R02 sind Metallcarbonyle durch Reaktion mit Schwefelwasserstoff zu Metallsulfiden umsetzbar, die sich nach Fällung in Reaktionszone R02 in Absetzzone A02 als Sulfidschlamm sammeln können. Über einen ersten Ablauf, Leitung 202, können die als Sulfidschlamm gesammelten Metallsulfide aus dem Aufbereitungsbehälter 2 ausgeleitet werden. Der außer dem Präzipitat (Sulfidschlamm) anfallende Überstand kann über einen zweiten Ablauf, Leitung 203, aus Aufbereitungsbehälter 2 ausgeleitet werden.

Verweilzeitbereich V02 und Waschbereich WO2 sind in ein einziges Gehäuse integriert, der Aufbereitungsbehälter 2 ist somit als mehrere Funktionen integrierende Vorrichtung ausgestaltet. Dabei grenzen Verweilzeitbereich V02 und Waschbereich WO2 über gasdurchlässigen Boden direkt aneinander an, ohne räumliche Trennung und/oder Beabstandung dieser beiden Bereiche und/oder Verbindung der beiden Bereiche durch beispielsweise eine Rohrleitung. Um Verweilzeitbereich V02 und Waschbereich WO2 in einem gemeinsamen Gehäuse zu realisieren, kann das Gehäuse beispielsweise über zumindest eine Schweißverbindung im Bereich des gasdurchlässigen Bodens B02 verfügen. Bei der Verbindung muss es sich nicht zwangsläufig um eine nicht lösbare, stoffschlüssige Verbindung handeln. Eine lösbare, form- und/oder kraftschlüssige Verbindung der Gehäuseteile ist ebenfalls denkbar.

Gasdurchlässiger Boden B02 ist im Beispiel der Figur 2 als Kaminboden ausgeführt. Durch diese Bauform kann gasdurchlässiger Boden B02 von unten nach oben von im Verweilzeitbereich V02 austretenden Gasbestandteilen durchströmt, also passiert, werden. Über einen zweiten Zulauf, Leitung 204, kann Waschbereich WO2 ein Waschmittel, beispielsweise regeneriertes Methanol, zugeführt werden. An Leitung 204 ist ein Flüssigkeitsverteiler angeschlossen. Über Leitung 204 zugeführtes Waschmittel absorbiert aus Verweilzeitbereich V02 austretende Gasbestandteile und sammelt sich als Flüssigkeitsschicht F02 auf gasdurchlässigem Boden B02. Durch die Ausgestaltung des gasdurchlässigen Bodens B02 als Kaminboden funktioniert gasdurchlässiger Boden B02 als Flüssigkeits-Sammelboden. Durch Bildung der Flüssigkeitsschicht F02 werden aus Verweilzeitbereich V02 austretende Metallcarbonyle aufweisende Gase gekühlt und dadurch mehr Metallcarbonyle in über Leitung 204 zugeführtem Waschmittel absorbiert. Aufgrund der durch Flüssigkeitsschicht F02 bewirkten Kühlung verfügt Aufbereitungsbehälter 2 im Gegensatz zur in Figur 1 beschriebenen Anordnung über keinen dedizierten aktiven Wärmetauscher.

Waschbereich WO2 und Verweilzeitbereich V02 sind durch eine Fluidverbindung, Leitung 205, miteinander verbunden. Über gasdurchlässigem Boden B02 gesammelte Flüssigkeit, die aus Verweilzeitbereich V02 ausgetretene Gasbestandteile enthält, wird über Leitung 205 zum Verweilzeitbereich zurückgeführt und tritt dort zunächst in Reaktionszone R02 ein, in der beispielsweise eine Umsetzung von in Waschmittel der Flüssigkeitsschicht F02 absorbierten Metallcarbonylen mit im Waschmittel gelöstem Schwefelwasserstoff zu Metallsulfiden stattfinden kann. Ausgefällte Metallsulfide sammeln sich in Absetzzone A02 und können über Leitung 202 aus dem Aufbereitungsbehälter 2 ausgeleitet werden.

Nicht in über Leitung 204 zugeführtem Waschmittel absorbierte Gasbestandteile können über Leitung 206 aus Aufbereitungsbehälter 2 abgezogen werden.

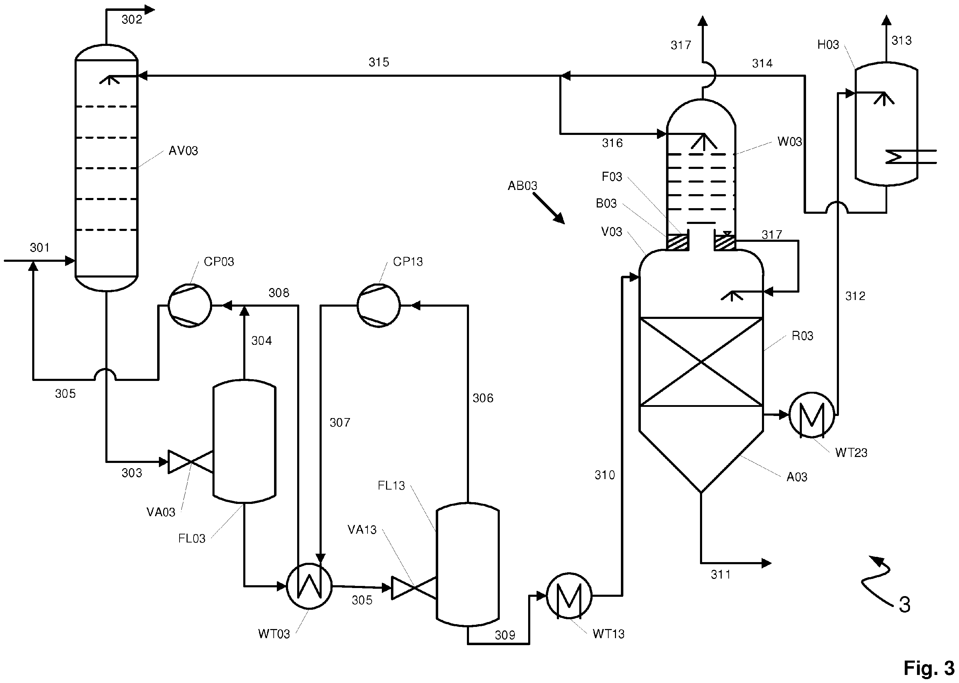

Figur 3 zeigt ein schematisches Verfahrensfließbild eines nichterfindungsgemäßen Verfahrens 3 zur Entfernung von Metallcarbonylen aus Rohsynthesegas unter Verwendung eines erfindungsgemäßen Aufbereitungsbehälters, hier als AB03 bezeichnet, mit Methanol als physikalisch wirkendem Waschmittel.

Einer Absorptionsvorrichtung AV03 wird über Leitung 301 ein Rohsynthesegas bei einem Druck von etwa 40 bar zugeführt. Absorptionsvorrichtung AV03 wird von oben nach unten mit Methanol als Waschmittel durchströmt, wobei unerwünschte Bestandteile wie Schwefelwasserstoff und Kohlendioxid aus über Leitung 301 zugeführtem Synthesegas entfernt werden. Dabei verfügt Absorptionsvorrichtung AV03 über mehrere durch Kaminböden getrennte Kompartimente zur selektiven Entfernung bestimmter Gasbestandteile je Kompartiment (nicht gezeigt). Gereinigtes Synthesegas verlässt Absorptionsvorrichtung AV03 über Leitung 302. Mit vornehmlich unerwünschten Bestandteilen beladenes Methanol wird über Leitung 303 aus Absorptionsvorrichtung AV03 abgezogen, über Entspannungsventil VA03 auf 12 bar entspannt und Entspannungsbehälter FL03 zugeführt. In Entspannungsbehälter FL03 wird beladenes Methanol teilweise regeneriert (Entspannungsregenerierung), wobei ein neben anderen Wertgasen auch Kohlenmonoxid enthaltendes Entspannungsgas freigesetzt wird, das über Leitung 304 aus Entspannungsbehälter FL03 abgezogen und Recyclegas-Kompressor CP03 zugeführt wird. CP03 verdichtet aus FL03 abgezogenes Entspannungsgas auf 40 bar. Rückverdichtetes aus CP03 austretendes Gas wird über Leitung 305 als Recyclegas zum Synthesegasstrom in Leitung 301 zur erneuten Absorption in Absorptionsvorrichtung AV03 geführt.

Auf 12 bar entspanntes beladenes Methanol wird im Sumpfbereich von Entspannungsbehälter FL03 abgezogen, im indirekten Wärmetauscher WT03 erwärmt, über Leitung 305 Entspannungsventil VA13 zugeführt, auf 6 bar entspannt und gleichzeitig Entspannungsbehälter FL13 zugeführt. In Entspannungsbehälter FL13 wird bereits teilentspanntes und dadurch teilregeneriertes beladenes Methanol weiter regeneriert (Entspannungsregenerierung), wobei ein erneut neben anderen Wertgasen auch Kohlenmonoxid enthaltendes Entspannungsgas freigesetzt wird. In FL13 freigesetztes Entspannungsgas wird über Leitung 306 abgezogen und Recyclegas-Kompressor CP13 zugeführt. CP13 verdichtet aus FL13 abgezogenes Entspannungsgas von 6 bar auf 12 bar. Verdichtetes Entspannungsgas aus CP13 wird über Leitung 307 indirektem Wärmetauscher WT03 zugeführt, dort abgekühlt und nach Zusammenführung mit Entspannungsgas aus Leitung 304 über Leitung 308 Recyclegas-Kompressor CP03 zur weiteren Verdichtung auf 40 bar zugeführt.

Aus dem Sumpfbereich von Entspannungsbehälter FL13 abgezogenes beladenes Methanol ist durch die vorgeschalteten Entspannungsregenerierungen in FL03 und FL13 bereits deutlich an Kohlenmonoxid verarmt, enthält jedoch ausreichende Mengen Schwefelwasserstoff zur Umsetzung der in AV03 absorbierten Metallcarbonyle zu Metallsulfiden. Zur Beschleunigung der Umsetzung zu Metallsulfiden wird beladenes Methanol zunächst über Leitung 309 indirektem Wärmetauscher WT13 zugeführt und dort auf eine für die Sulfid-Fällung ausreichende Temperatur erwärmt. Erwärmtes beladenes Methanol wird über Leitung 310 Aufbereitungsbehälter AB02 zugeführt, der bezüglich seiner Ausgestaltung dem in Figur 2 gezeigten Aufbereitungsbehälter entspricht. Aufbereitungsbehälter weist wie in Figur 2 gezeigt einen oberen Waschbereich WO3 und einen unteren Verweilzeitbereich V03 auf, wobei der Verweilzeitbereich wiederum über eine obere Reaktionszone R03 und eine untere Absetzzone A03 verfügt. Beladenes Methanol wird zunächst der Reaktionszone R03 über Leitung 310 zugeführt. Reaktionszone R03 ist zur Vergrößerung der inneren Oberfläche regellos mit Füllkörpern belegt. Beladenes Methanol durchläuft die Reaktionszone R03 mit einer Verweilzeit von wenigstens 5 Stunden, wobei Metallcarbonyle in beladenem Methanol weitgehend vollständig mit Schwefelwasserstoff zu Metallsulfiden unter Ausfällung der Metallsulfide umgesetzt werden. Sedimentierte Metallcarbonyle sammeln sich in Absetzzone A03 als Sulfidschlamm und werden über Leitung 311 aus Aufbereitungsbehälter AB03 abgezogen.

Neben dem Sulfidschlamm anfallender Überstand in Form von beladenem Methanol wird aus Reaktionszone R03 über Leitung 311 abgezogen, in indirektem Wärmetauscher WT23 vorgewärmt und über Leitung 312 Behälter H03 zur Heißregenerierung zugeführt. Bei der Heißregenerierung anfallendes Gasgemisch weist vor allem Schwefelwasserstoff und dampfförmiges Methanol auf. Es wird über Leitung 313 abgezogen und der weiteren Aufarbeitung zugeführt, beispielsweise der Auskondensation des gasförmigen Methanols und Zuführen des dabei erhaltenen trockenen Schwefelwasserstoffs zu einer Claus-Anlage für die Schwefelsynthese. Regeneriertes Methanol wird über Leitung 314 und anschließend entweder über Leitung 315 zur Absorptionsvorrichtung AV03 geführt oder über Leitung 316 dem Waschbereich W03 des Aufbereitungsbehälters AB03 zugeführt. Gegebenenfalls wird Methanol vor Zuführung zur Absorptionsvorrichtung AV03 und/oder Waschbereich W03 mit einem Kompressor (nicht gezeigt) rückverdichtet.

Aus dem Verweilzeitbereich V03 des Aufbereitungsbehälters AB03 gasen auch nicht zu Metallsulfiden umgesetzte Metallcarbonyle aus, passieren den gasdurchlässigen Boden B03 und gelangen in Waschbereich WO3, wo sie durch über Leitung 316 zugeführtes regeneriertes Methanol absorbiert werden. Über gasdurchlässigem Boden B03 bildet sich eine regeneriertes Methanol aufweisende Flüssigkeitsschicht F03. Flüssigkeitsschicht F03 sorgt für die Kühlung der aus V03 ausgasenden Metallcarbonyle beziehungsweise sorgt dafür, dass einmal in regeneriertem Methanol absorbierte Metallcarbonyle durch Kühlung nicht wieder desorbiert werden. Mit Metallcarbonylen beladenes Methanol kann anschließend über Leitung 317 in Verweilzeitbereich V03 zurückgeführt werden, wo ursprünglich dort ausgetretene Metallcarbonyle der Fällung als Metallsulfide in der Reaktions- und Absetzzone A03, R03 zugeführt werden. Nicht durch regeneriertes Methanol in WO3 absorbierte Wertgase wie Kohlenmonoxid oder Wasserstoff werden über Leitung 317 abgezogen und nach Rückverdichtung in einem Kompressor als Recyclegas-Strom zur Absorptionsvorrichtung zurückgeführt (nicht gezeigt).

Die wesentliche technische Merkmale der Erfindung werden explizit in Wortlaut des unabhängigen Aufbereitungsbehälter Anspruch 1 bzw. in Wortlaut des unabhängigen Vorrichtung- zur-Gaswäsche- Anspruch 8 definiert. Weitere Merkmale der Erfindung werden in den Wortlauten der abhängigen Ansprüchen 2-7 explizit definiert. Ausführungsformen der Erfindung werden unter Bezugnahme Während die Erfindung im Detail in den Zeichnungen und der vorhergehenden Beschreibung dargestellt und beschrieben wurde, sollen eine solche Darstellung und Beschreibung als veranschaulichend oder beispielhaft und nicht einschränkend betrachtet werden. Die Erfindung ist nicht auf die offenbarten Ausführungsformen beschränkt. Andere Variationen der offenbarten Ausführungsformen können von einem Fachmann auf dem Gebiet der beanspruchten Erfindung und der abhängigen Ansprüche verstanden und ausgeführt werden.

In den Ansprüchen schließt das Wort "aufweisend" oder "umfassend" weitere Elemente oder Schritte nicht aus, und der unbestimmte Artikel "ein" oder "eine" schließt eine Mehrzahl nicht aus. Bezugszeichen in den Ansprüchen sollten nicht so ausgelegt werden, dass sie den Umfang der Ansprüche einschränken.

### Bezugszeichenliste

- 1: Verfahren (Stand der Technik)
- 101-108: Leitung
- A01: Absetzzone
- R01: Reaktionszone
- V01: Verweilzeitbehälter
- WT01: Indirekter Wärmetauscher
- WK01: Carbonyl-Waschkolonne

- 2: Aufbereitungsbehälter (Erfindung)
- 201-206: Leitung
- A02: Absetzzone
- R02: Reaktionszone
- V02: Verweilzeitbereich
- WO2: Waschbereich
- B02: Gasdurchlässiger Boden
- F02: Flüssigkeitsschicht
- 3: Verfahren (Erfindung)
- 301-317: Leitung
- AV03: Absorptionsvorrichtung
- VA03, VA13: Entspannungsventil
- WT03, WT13, WT23: Indirekter Wärmetauscher
- FL03, FL13: Entspannungsbehälter
- CP03, CP13: Recyclegas-Kompressor
- AB03: Aufbereitungsbehälter
- A03: Absetzzone
- R03: Reaktionszone
- V03: Verweilzeitbereich
- WO3: Waschbereich
- B03: Gasdurchlässiger Boden
- F03: Flüssigkeitsschicht
- H03: Behälter zur Heißregenerierung

## Patentansprüche

1. Ein Aufbereitungsbehälter zur Entfernung von Metallcarbonylen aus Rohsynthesegas, aufweisend
einen Verweilzeitbereich zum Fällen von Feststoffen aus einer Lösung oder Suspension;
einen ersten Zulauf zum Zuführen der Lösung oder Suspension zum Verweilzeitbereich;
einen ersten Ablauf zum Abführen gefällter Feststoffe aus dem Verweilzeitbereich;
einen zweiten Ablauf zum Abführen des durch Fällen der Feststoffe erhaltenen Überstandes der Lösung oder Suspension aus dem Verweilzeitbereich; einen Waschbereich zur Absorption von aus der Lösung oder Suspension austretenden Gasbestandteilen;
einen zweiten Zulauf zum Zuführen von regeneriertem Waschmittel zum Waschbereich,
**dadurch gekennzeichnet, dass**
der Waschbereich und der Verweilzeitbereich durch eine Fluidverbindung miteinander verbunden sind,
der Verweilzeitbereich und der Waschbereich des Aufbereitungsbehälters durch einen gasdurchlässigen Boden voneinander separiert sind,
der Verweilzeitbereich, der Waschbereich und der gasdurchlässige Boden in ein einziges Gehäuse des Aufbereitungsbehälters integriert sind, und wobei der gasdurchlässige Boden als Kaminboden ausgestaltet ist.

2. Aufbereitungsbehälter nach Anspruch 1, **dadurch gekennzeichnet, dass** der Verweilzeitbereich des Aufbereitungsbehälters eine Reaktionszone und eine Absetzzone aufweist.

3. Aufbereitungsbehälter nach Anspruch 2, **dadurch gekennzeichnet, dass** die Absetzzone des Verweilzeitbereichs einen konisch ausgeformten Boden zum Sammeln der gefällten Feststoffe aufweist.

4. Aufbereitungsbehälter nach Anspruch 2 oder 3, **dadurch gekennzeichnet, dass** in der Reaktionszone Füllkörper und/oder strukturierte Packungen zur Vergrößerung der inneren Oberfläche der Reaktionszone angeordnet sind.

5. Aufbereitungsbehälter nach einem der Ansprüche 1 bis 4, **dadurch gekennzeichnet, dass** der Aufbereitungsbehälter keinen Wärmetauscher aufweist.

6. Aufbereitungsbehälter nach Anspruch 5, **dadurch gekennzeichnet, dass** der Aufbereitungsbehälter keinen indirekten Wärmetauscher aufweist.

7. Aufbereitungsbehälter nach einem der Ansprüche 1 bis 6, **dadurch gekennzeichnet, dass** die Fluidverbindung zur Überführung eines Fluids vom Waschbereich zum Verweilzeitbereich des Aufbereitungsbehälters ausgestaltet ist.

8. Vorrichtung zur Gaswäsche von Rohsynthesegas, aufweisend einen Aufbereitungsbehälter nach einem der Ansprüche 1 bis 7.

## Claims

1. A treatment vessel for removal of metal carbonyls from crude synthesis gas comprising
a residence time region for precipitating solids from a solution or suspension;
a first feed conduit for supplying the solution or suspension to the residence time region;
a first discharge conduit for discharging precipitated solids from the residence time region;
a second discharge conduit for discharging the supernatant of the solution or suspension obtained by precipitating the solids from the residence time region; a scrubbing region for absorption of gas constituents ejected from the solution or suspension;
a second feed conduit for supplying regenerated scrubbing medium to the scrubbing region,
**characterized in that**
the scrubbing region and the residence time region are connected to one another via a fluidic connection,
the residence time region and the scrubbing region of the treatment vessel are separated from one another by a gas-permeable tray,
the residence time region, the scrubbing region and the gas-permeable tray are integrated into a single housing of the treatment vessel, and wherein the gas-permeable tray is in the form of a chimney tray.

2. Treatment vessel according to Claim 1, **characterized in that** the residence time region of the treatment vessel has a reaction zone and a settling zone.

3. Treatment vessel according to Claim 2, **characterized in that** the settling zone of the residence time region comprises a conical tray for collecting the precipitated solids.

4. Treatment vessel according to Claim 2 or 3, **characterized in that** packing bodies and/or structured packings are arranged in the reaction zone to increase the internal surface area of the reaction zone.

5. Treatment vessel according to any of Claims 1 to 4, **characterized in that** the treatment vessel does not comprise a heat exchanger.

6. Treatment vessel according to Claim 5, **characterized in that** the treatment vessel does not comprise an indirect heat exchanger.

7. Treatment vessel according to any of Claims 1 to 6, **characterized in that** the fluidic connection is configured for transferring a fluid from the scrubbing region to the residence time region of the treatment vessel.

8. Apparatus for gas scrubbing of crude synthesis gas comprising a treatment vessel according to any of Claims 1 to 7.

## Revendications

1. Récipient de préparation destiné à éliminer des carbonyles métalliques à partir de gaz de synthèse bruts, présentant
une zone de séjour pour précipiter des solides à partir d'une solution ou d'une suspension ;
une première alimentation pour introduire la solution ou la suspension dans la zone de séjour ;
une première sortie pour évacuer les solides précipités de la zone de séjour ;
une deuxième sortie pour évacuer le surnageant de la solution ou de la suspension, obtenu par la précipitation des solides, de la zone de séjour ; une zone de lavage pour absorber les constituants gazeux sortant de la solution ou de la suspension ;
une deuxième alimentation pour introduire un agent de lavage régénéré dans la zone de lavage,
**caractérisé en ce que**
la zone de lavage et la zone de séjour sont reliées l'une à l'autre par une liaison fluidique,
la zone de séjour et la zone de lavage du récipient de préparation sont séparées l'une de l'autre par un fond perméable aux gaz, la zone de séjour, la zone de lavage et le fond perméable aux gaz sont intégrés dans un seul boîtier du récipient de préparation et le fond perméable aux gaz étant conçu sous forme d'un plateau à cheminée.

2. Récipient de préparation selon la revendication 1, **caractérisé en ce que** la zone de séjour du récipient de préparation présente une zone de réaction et une zone de sédimentation.

3. Récipient de préparation selon la revendication 2, **caractérisé en ce que** la zone de sédimentation de la zone de séjour présente un fond de forme conique pour rassembler les solides précipités.

4. Récipient de précipitation selon la revendication 2 ou 3, **caractérisé en ce que** des corps de remplissage et/ou des garnissages structurés sont agencés dans la zone de réaction pour agrandir la surface interne de la zone de réaction.

5. Récipient de préparation selon l'une des revendications 1 à 4, **caractérisé en ce que** le récipient de préparation ne présente pas d'échangeur de chaleur.

6. Récipient de préparation selon la revendication 5, **caractérisé en ce que** le récipient de préparation ne présente pas d'échangeur de chaleur indirect.

7. Récipient de préparation selon l'une des revendications 1 à 6, **caractérisé en ce que** la liaison fluidique est conçue pour transférer un fluide à partir de la zone de lavage vers la zone de séjour du récipient de préparation.

8. Dispositif pour le lavage de gaz d'un gaz de synthèse brut, présentant un récipient de préparation selon l'une des revendications 1 à 7.
